# EUROPÄISCHE PATENTSCHRIFT

(11) **EP 3 108 141 B1**
(45) Veröffentlichungstag und Bekanntmachung des Hinweises auf die Patenterteilung: **10.03.2021**
(21) Anmeldenummer: 15700951.5
(22) Anmeldetag: 14.01.2015
(51) Int. Cl.: F04B 17/03, F04B 17/06, F04B 53/08, F04B 53/16, H02K 5/20, H02K 9/04

(54) **KOMPAKTAGGREGAT MIT ELEKTROMOTOR UND HYDROPUMPE**
COMPACT UNIT WITH ELECTRIC MOTOR AND HYDRO-PUMP
UNITÉ COMPACTE AVEC MOTEUR ÉLECTRIQUE ET HYDRO-POMPE

(30) Priorität: 20.02.2014 DE 102014002410
(43) Veröffentlichungstag der Anmeldung: 28.12.2016
(73) Patentinhaber: Hydac Fluidtechnik GmbH, 66280 Sulzbach/Saar (DE)
(72) Erfinder: BÖHLER, Andreas, 66123 Saarbrücken (DE); KUHN, Markus, 66687 Wadern-Krettnich (DE)
(74) Vertreter: Bartels und Partner, Patentanwälte
(86) Internationale Anmeldenummer: PCT/EP2015/000053
(87) Internationale Veröffentlichungsnummer: WO 2015/124248

(56) Entgegenhaltungen:
- DE-A1- 4 421 375
- DE-A1- 19 652 706
- DE-A1- 19 736 364
- DE-A1- 19 920 563

## Beschreibung

Die Erfindung betrifft Kompaktaggregat mit den Merkmalen im Oberbegriff von Anspruch 1.

Kompaktaggregate dieser Art sind Stand der Technik. Für die Druckversorgung von Hydraulikkreisläufen kommen derartige Aggregate insbesondere zum Einsatz, wenn Arbeitshydrauliken mit unter Druck stehender Hydraulikflüssigkeit an Orten zu versorgen sind, an denen nur ein begrenztes Platzangebot zur Verfügung steht. Wenn an beengten Stellen Aggregate im Dauerbetrieb betrieben werden müssen und daher Maßnahmen zur Motorkühlung sowie zur Kühlung der Hydraulikflüssigkeit getroffen sein müssen, bereitet die Unterbringung der Gesamtkomponenten einschließlich Hydropumpe und Wärmetauschereinrichtung in einem geringe Abmessungen aufweisenden Gehäuse vielfach Schwierigkeiten. Dies gilt beispielsweise, wenn in geschlossenen Fabrikgebäuden Hydrauliken von Fertigungsmaschinen, wie Drehmaschinen, mit Druckfluid zu versorgen sind.

Die DE 44 21 375 A1 beschreibt ein Kompaktaggregat, zumindest bestehend aus einem in Gehäuseteilen eines Aggregatgehäuses aufgenommenen Elektromotor, der mindestens eine Hydropumpe antreibt und dabei Wärme abgibt; aus einer Luft-Wärmetauschereinrichtung; und aus einem Lüfter, der zur Erzeugung eines Luftstroms antreibbar ist, wobei im Aggregatgehäuse eine Strömungsleiteinrichtung vorhanden ist.

Weitere Kompaktaggregate gehen aus der DE 197 36 364 A1, der DE 196 52 706 A1 und der DE 199 20 563 A1 hervor.

Im Hinblick auf diese Problematik liegt der Erfindung die Aufgabe zugrunde, ein Kompaktaggregat zur Verfügung zu stellen, das sich durch eine besonders platzsparende Bauweise auszeichnet und dass alle elementaren Komponenten für einen funktionssicheren Betrieb in einem gemeinsamen Gehäuse integriert sind.

Diese Aufgabe ist erfindungsgemäß durch ein Kompaktaggregat gelöst, das die Merkmale des Patentanspruchs 1 in seiner Gesamtheit aufweist.

Demgemäß besteht eine wesentliche Besonderheit der Erfindung gemäß dem Kennzeichen von Anspruch 1 darin, dass die Strömungsleiteinrichtung aus dem durch den Lüfter erzeugten Luftstrom Teilströme bildet, von denen einer den Elektromotor zu dessen Kühlung umströmt und ein weiterer der Wärmetauschereinrichtung zuströmt; und dass der Elektromotor eine erste Hydropumpe und eine zweite Hydropumpe antreibt, die mit ihrer Saugseite mit einem Hydraulikfluid bevorratenden Tank verbunden sind und von denen die erste Hydropumpe eine Fluidströmung durch die Wärmetauschereinrichtung hindurch zum Tank erzeugt und die zweite Hydropumpe zur Druckversorgung mindestens einer Arbeitshydraulik dient.

Die Bildung von Teilströmen im Inneren des Aggregatgehäuses ist zum einen deshalb vorteilhaft, weil dadurch die Möglichkeit besteht, die zu kühlenden Komponenten im Aggregatgehäuse in beliebiger Lagebeziehung zu dem den Luftstrom erzeugenden Lüfter anzuordnen, also an solchen Einbaustellen, an denen der Einbauplatz im Aggregatgehäuse optimal ausgenutzt ist und so, dass eine besonders effiziente Umströmung hauptsächlich zu kühlender Komponenten, wie dem Elektromotor, erreicht ist. Aufgrund der jeweils möglichen Luftströmung lassen sich jedenfalls alle elementaren Komponenten des Kompaktaggregates wie den Elektromotor, die Luft-Wärmetauschereinrichtung sowie den Lüfter in einem gemeinsamen Gehäuse integrieren. Dergestalt ist auch ein funktionssicherer Dauerlaufbetrieb für das Kompaktaggregat erreicht.

Aufgrund der aufgezeigten Luftstromführung lässt sich auch in gewissem Umfang im Inneren des Vorrichtungsgehäuses ein Überdruck generieren, so dass alle empfindlichen Teile innerhalb des Gehäuses durch dieses staubdicht sowie vor möglichem Spritzwasser geschützt sind. Aufgrund der im Betrieb vorhandenen Überdrucksituation, kann eine erhöhte IP-Schutzklasse bzw. IP-Schutzgrad, hier IP 54, ohne weiteres erreicht werden.

Der Elektromotor treibt eine erste Hydropumpe und eine zweite Hydropumpe gemeinsam an, die mit ihrer Saugseite mit einem Hydraulikfluid bevorratenden Tank verbunden sind und von denen die erste Hydropumpe eine Fluidströmung durch die Wärmetauschereinrichtung hindurch zum Tank erzeugt und die zweite Hydropumpe zur Druckversorgung einer Arbeitshydraulik dient. Zwischen dem Tank und den Saugseiten der Hydropumpen ist vorzugsweise jeweils eine Filtereinrichtung vorgesehen. Die genannten Pumpen können ihre Funktion auch tauschen. Ferner ist denkbar, im Fall des Vorliegens von zwei Pumpen eine der Pumpen auch durch einen anderen, auch externen, Antrieb zu betätigen.

Für eine effiziente Umströmung des Elektromotors kann diesbezüglich die Anordnung mit Vorteil so getroffen sein, dass der Elektromotor im Luftstrom zwischen Lüfter und Wärmetauschereinrichtung angeordnet ist.

Bei besonders vorteilhaften Ausführungsbeispielen bildet die Strömungsleiteinrichtung aus dem Luftstrom einen zusätzlichen Teilstrom, der als Kühlluftstrom für einen zur Steuerung des Elektromotors vorgesehenen Frequenzumrichter dient. Die bedarfsgerechte Steuerung des Elektromotors mittels eines Frequenzumrichters ermöglicht einen besonders energieeffizienten Betrieb, wobei die Kühlung des Frequenzumrichters durch den aus dem Luftstrom abgezweigten Teilstrom eine hohe Betriebssicherheit des Aggregats auch bei Dauerbetrieb gewährleistet.

Bei besonders vorteilhaften Ausführungsbeispielen ist die Anordnung so getroffen, dass die Strömungsleiteinrichtung für den Luftstrom einen ersten Strömungsweg vorgibt, der zwischen Frontseite und dazu entgegengesetzter Rückseite des Aggregatgehäuses verläuft und in dem der Lüfter, der Elektromotor und ein Kühlkörper des Frequenzumrichters gelegen sind, sowie einen davon abzweigenden weiteren Strömungsweg vorgibt, der zu einer Seite des Aggregatgehäuses hin, vorzugsweise im rechten Winkel, abzweigt und in dem die Wärmetauschereinrichtung angeordnet ist. Dadurch lässt sich die Wärmetauschereinrichtung mit entsprechend großer Durchströmfläche entlang einer Gehäuseseite neben dem Elektromotor derart anordnen, dass die Gehäusegrundfläche gut ausgenutzt ist. Der genannte erste Strömungsweg sowie der genannte weitere zweite Strömungsweg lassen sich in Reihe auch hintereinander anordnen, so dass zunächst der Elektromotor und dann anschließend die Wärmetauschereinrichtung angeströmt wird.

Eine besonders kompakte Bauweise ist realisierbar, wenn der Tank im Aggregatgehäuse ein Basisteil bildet, auf dem, in einer Axialrichtung von Frontseite zu Rückseite hin, der Lüfter, der Elektromotor und erste und zweite Hydropumpe auf einer Deckplatte des Tanks angeordnet sind und die Wärmetauschereinrichtung seitlich des Elektromotors und der Frequenzumrichter seitlich der Hydropumpen angeordnet sind.

Bei einem derartigen Aufbau auf einem ein integrales Basisteil des Aggregats bildenden Tank können in besonders vorteilhafter Weise als Bestandteile der Strömungsleiteinrichtung die Trägerplatte des Tanks sowie eine den Lüfter und den Elektromotor umgebende Gehäusehaube vorgesehen sein. Die Strömungsleiteinrichtung bildet dadurch gleichzeitig eine Art Kapselung zur Schallisolation. Für eine Fertigung in Großserie sind diese Gehäuseelemente vorzugsweise als Kunststoffspritzgussteile oder als Aluminium-Druckgussteile günstig herstellbar, wobei durch den jeweiligen Gehäusewerkstoff gleichzeitig eine gute Schallisolation erreichbar ist.

Nachstehend ist die Erfindung anhand eines in der Zeichnung dargestellten Ausführungsbeispiels im Einzelnen erläutert. Es zeigen:
- Fig. 1: in Symboldarstellung die Hydraulikschaltung eines Ausführungsbeispiels des erfindungsgemäßen Kompaktaggregats;
- Fig. 2: eine perspektivische Schrägansicht des Ausführungsbeispiels, gesehen auf eine Frontseite und eine Breitseite mit daran befindlicher Wärmetauschereinrichtung;
- Fig. 3: eine perspektivische Schrägansicht des Ausführungsbeispiels, gesehen auf die der Wärmetauschereinrichtung entgegengesetzte Breitseite sowie die Rückseite des Aggregatgehäuses; und
- Fig. 4: eine in gegenüber Fig. 2 und 3 etwas größerem Maßstab dargestellte Draufsicht des Ausführungsbeispiels mit vom Gehäusebasisteil abgenommener Gehäusehaube.

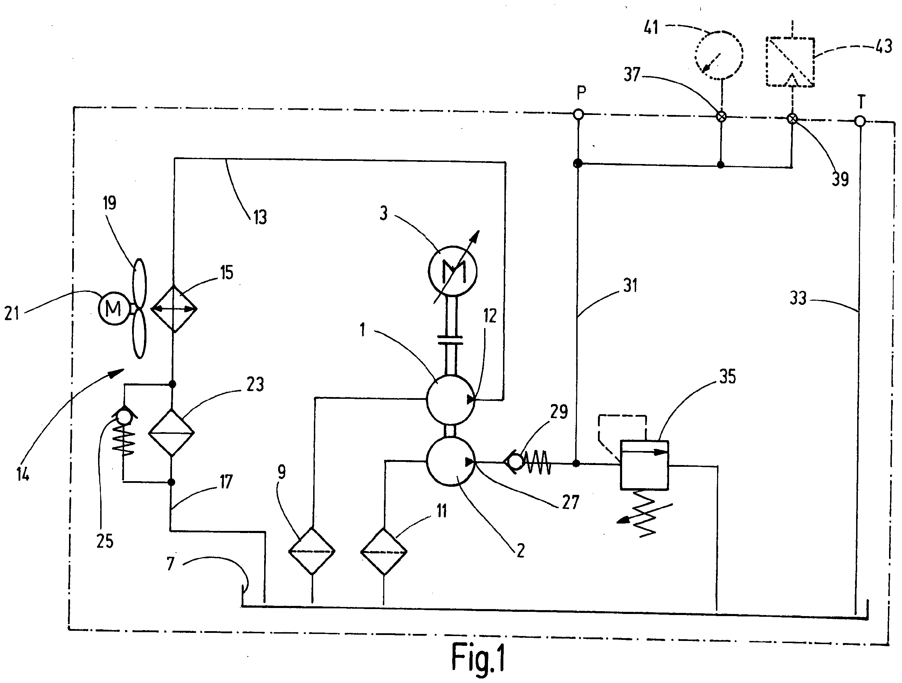

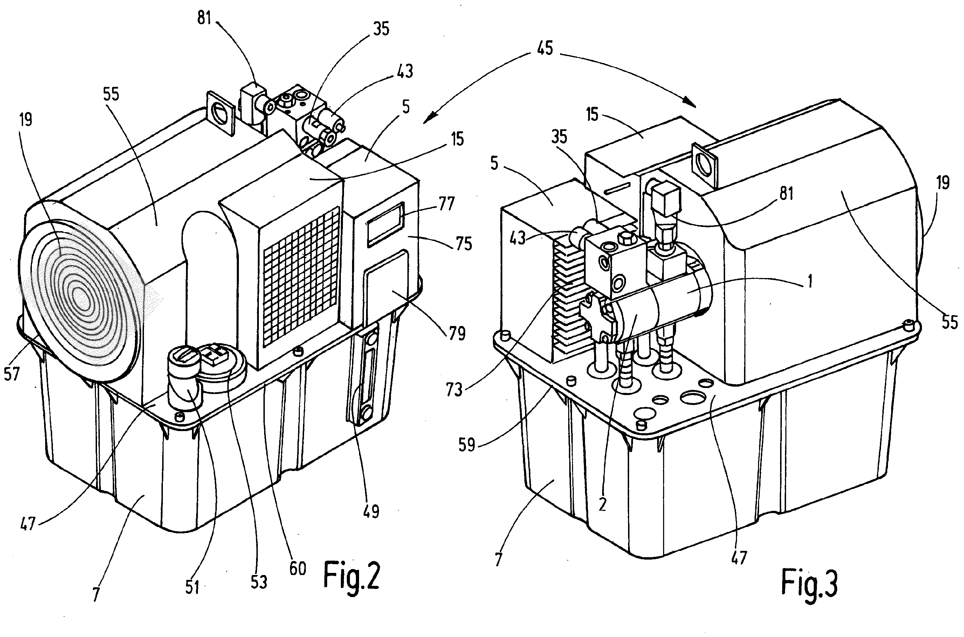

Wie in Fig. 1 gezeigt, sind eine Hydropumpe 1 und eine zweite Hydropumpe 2 gemeinsam durch einen Elektromotor 3 antreibbar, dessen Drehzahl mittels eines in den Fig. 2 und 3 sichtbaren Frequenzumrichters 5 regelbar ist. Beide Hydropumpen 1 und 2 sind saugseitig mit einem Hydraulikfluid bevorratenden Tank 7 verbunden, wobei in der Verbindung zur Saugseite der Pumpen 1 und 2 jeweils ein Filterelement 9 bzw. 11 angeordnet ist. Die Hydropumpe 1 dient als Förderpumpe für eine Wärmetauschereinrichtung 14 mit einer an der Druckseite 12 der Pumpe 1 angeschlossenen Vorlaufleitung 13, einem Öl-Luft-Wärmetauscher 15 und einer zum Tank 7 führenden Rücklaufleitung 17. Ein einen Luftstrom erzeugender, mit 19 bezeichneter Lüfter ist durch einen Lüfterantrieb betätigbar, beim vorliegenden Beispiel in Form eines elektrischen Lüftermotors 21. Wenn es gewünscht wird, kann in der Rücklaufleitung 17 ein Rücklauffilter 23 vorgesehen sein, wie es in dem Schaltbild der Fig. 1 dargestellt ist, wobei der Rücklauffilter 23 durch einen Bypass mit einem auf einen Öffnungsdruck von beispielsweise 3 bar eingestellten Bypassventil 25 umgehbar ist.

Die Druckseite 27 der zweiten Hydropumpe 2 ist über ein Rückschlagventil 29 mit einer Druckleitung 31 verbunden, die zu einem Druckanschluss P des Aggregats führt, über den der zugeordnete Hydraulikkreislauf versorgbar ist, von dem die Rücklaufmengen über einen Tankanschluss T und eine Tankleitung 33 zum Tank 7 zurückgelangen. Die Druckleitung 31 ist über ein Druckbegrenzungsventil 35 zum Tank 7 hin abgesichert, wobei das Druckbegrenzungsventil 35 beispielsweise auf 45 bar eingestellt ist. Der Elektromotor 3 ist bei einer Leistung von beispielsweise 1,5 KW mittels des Frequenzumrichters 5 auf einen Betriebsdrehzahlbereich von beispielsweise 600 bis 2000 1/min einstellbar, bei einer Maximaldrehzahl von beispielsweise 3200 1/min. Außer dem Druckanschluss P und mindestens einem Tankanschluss T sind Messanschlüsse 37 und 39 für ein Manometer 41 bzw. einen Drucksensor 43 an der Druckleitung 31 angeschlossen. Die genannten Pumpen 1 und 2 können auch betreffend ihre Funktion miteinander getauscht und anstelle eines gekoppelten Antriebes einzeln angetrieben werden, gegebenenfalls auch von einer externen, außerhalb des Kompaktaggregates liegenden Antriebsquelle. Ferner kann die jeweilige Baugröße oder das Leistungsvermögen der jeweils eingesetzten Hydropumpe voneinander verschieden, insbesondere variabel gehalten sein.

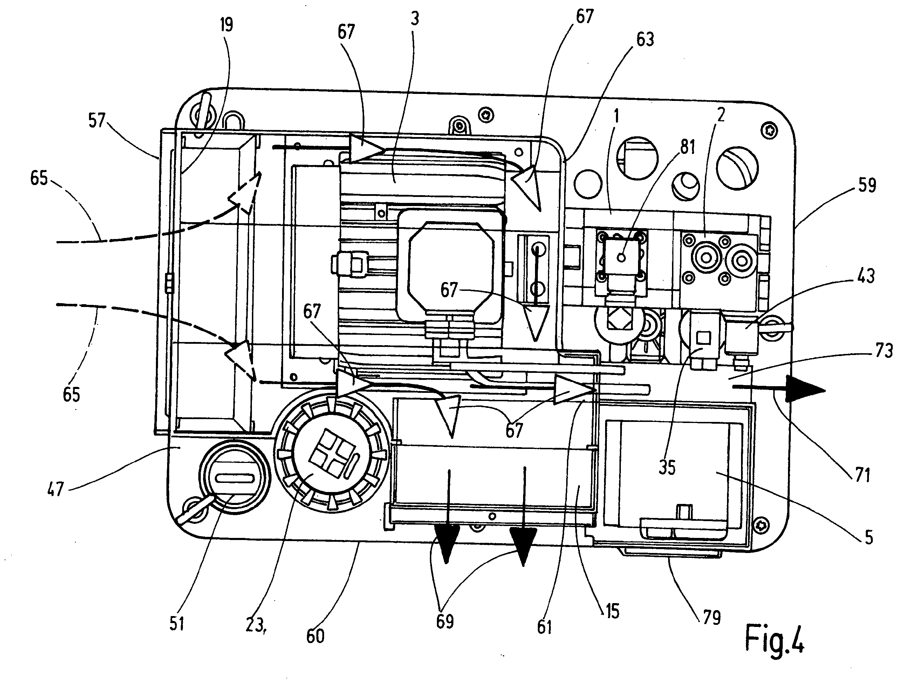

Die Fig. 2 bis 4 verdeutlichen den mechanischen Aufbau des Aggregats. Wie gezeigt, hat das als Ganzes mit 45 bezeichnete Aggregatgehäuse einen im großen Ganzen rechteckförmigen Umriss, wobei der Tank 7 das Basisteil des Gehäuses 45 bildet und wobei sich der Tank 7 annähernd über die gesamte Grundfläche und bis annähernd zur halben Höhe des Gehäuses 45 erstreckt. Der Tank 7 ist an seiner Oberseite durch eine ebene Trägerplatte 47 abgeschlossen, auf der die wesentlichen Komponenten aufgebaut sind. In Fig. 2 sind ein am Tank 7 seitlich angebrachter Füllstandsanzeiger 49 sowie an der Oberseite der Trägerplatte 47 ein Einfüllstutzen 51 sowie die Endkappe 53 des optionalen Rücklauffilters 23 (Fig. 1) sichtbar. In beiden Fig. 2 und 3 ist eine kastenartige Gehäusehaube 55 sichtbar, die, wie der Vergleich mit der Fig. 4 zeigt, den an der Gehäusefrontseite 57 befindlichen Lüfter 19 und den Elektromotor 3 umgibt, der sich, von der Gehäusefrontseite 57 weg in Richtung auf die Gehäuserückseite 59 hin an den Lüfter 19 anschließt. Zwischen dem Elektromotor 3 und der in Fig. 4 unten liegenden Gehäuseseite 60 ist auf der Trägerplatte 47 der Wärmetauscher 15 angeordnet, der sich an eine Ausströmöffnung 61 der Gehäusehaube 55 anschließt, deren Umriss- oder Verbindungslinie an der Deckplatte 47 in Fig. 4 mit einer Doppellinie 63 kenntlich gemacht ist. Auf der Trägerplatte 47 und/oder innerhalb des Vorrichtungsgehäuses 45 können auch andere Steuerblöcke wie beispielsweise Ventilbaugruppen mit anderen hydraulischen Funktionen als vorstehend beschrieben aufgenommen sein.

Der mit gestrichelt gezeichneten Strömungspfeilen 65 kenntlich gemachte, vom Lüfter 19 erzeugte Luftstrom wird bei der gezeigten Konfiguration in Form eines mit hellen Pfeilköpfen 67 bezeichneten Teilstroms, der den Elektromotor 3 umströmt, sowie eines zweiten, mit schwarzen Pfeilköpfen 63 bezeichneten Teilstroms in direkter reihenmäßiger Aufeinanderfolge geführt, der als Querstrom den Wärmetauscher 15 durchströmt. Ein weiterer, dritter Teilstrom, der den ersten Teilstrom 67 in Richtung auf die Gehäuserückseite 59 und insoweit wiederum in Reihenanordnung fortsetzt, tritt dort aus, wie mit einem ebenfalls mit schwarzem Pfeilkopf 71 versehenen Pfeil gezeigt ist, nachdem er Lüftungsstege 73 durchströmt hat, die zur Kühlung des sich an den Wärmetauscher 15 anschließenden Frequenzumrichters 5 eine Kühllamellenanordnung bilden. Am Umrichtergehäuse 75 des Frequenzumrichters 5 sind in Fig. 2 ein Display 77 zur Anzeige von Betriebsdaten sowie eine Verschlussklappe 79 für die Abdeckung elektrischer Anschlusseinrichtungen sichtbar. Die Platine des Frequenzumrichters 5 ist mithin im Gehäuse 45 integriert und zwar in staubdichter sowie spritzwassergeschützter Bauweise. Insbesondere im Betrieb des Kompaktaggregates kommt es innerhalb des nach außen hin im Wesentlichen dichten Gehäuses 45 zu einer Art Überdrucksituation, was von außen stammende Fremdpartikel davon abhält, in das Innere des Gehäuses 45 einzudringen, so dass für das Kompaktaggregat eine erhöhte Schutzklasse, hier IP 54, ohne Weiteres erreicht ist.

Bedingt durch die Rotation der Lüfterflügel des Lüfters 19 wird der Kühlluftstrom spiralförmig um das Außengehäuse des Elektromotors 3 geführt und überstreicht insoweit gleichförmig dessen außenumfangsseitig angeordneten Längs-Kühlrippen. Um insoweit eine Zwangsführung für den Kühlluftstrom zu erreichen, sieht die Strömungsleiteinrichtung vorzugsweise einen gleichförmigen Abstand zwischen der Außenumfangsseite des Elektromotors 3 und der zuordenbaren, im Querschnitt zylindrischen Querschnittsfläche des Gehäuses 45 vor. Damit es auf der dem Lüfter 19 abgewandten Rückseite des Elektromotors 3 nicht zu einem Wärmestau kommt, ist dort ein großzügig bemessener Durchströmungsraum vorgesehen, gebildet aus der Rückseite des Elektromotors sowie der benachbarten Stirnwand des Gehäuses 45 für die Aufnahme des Elektromotors 3. In diesem rückwärtigen Bereich wird der Kühlluftstrom (Pfeilköpfe 67) zu der sonstigen Durchströmungsrichtung des Lüfters 19 im rechten Winkel abgelenkt und durchströmt mit dieser Umlenkung den Öl-Luft-Wärmetauscher 15. Der jeweils zum Einsatz kommende Tank 7, der in Blickrichtung auf die Figuren 2 und 3 gesehen nach oben hin von der Trägerplatte 47 abgedeckt ist, kann insbesondere von der Bauhöhe her unterschiedlich ausgestaltet sein und somit unterschiedliche Tankvorratsmengen aufnehmen. Auch der dahingehende Tank 7 besteht vorzugsweise aus Kunststoff oder aus Alu-Druckguss.

Darüber hinaus wird die Kühlluft aber auch geradlinig weitergeführt und durchströmt die Kühllamellen des Frequenzumrichters 5 derart, dass der Luftstrom sich zwischen den Kühllamellen in Parallelführung aufteilt. Nach Passieren der Kühllamellen oder Lüftungsstege 73 des Frequenzumrichters 5 erweitern sich die Querschnittsprofile insoweit zur Umgebung hin, so dass beim Durchströmen der Kühllamellenanordnung kein Strömungswiderstand sich aufbauen kann. Ein großer Vorteil ist auch, dass der Lüfter 19 wie vorstehend beschrieben, nicht nur im Druckbetrieb gefahren werden kann, sondern durch Umkehrung der Drehrichtung der Lüfterflügel auch saugend im Unterdruckbetrieb den Luftstrom in der gegenläufigen Richtung durch das Kompaktaggregat mit seinen genannten Komponenten führen kann. Der dahingehende Umkehrbetrieb könnte dann sinnvoll sein, wenn beispielsweise eine nicht näher dargestellte Sensorik feststellt, dass der Frequenzumrichter 5 oder die Wärmetauschereinrichtung 14 eine höhere Temperatur als die übliche Betriebstemperatur hat, um dann dergestalt diese Komponenten in Strömungsrichtung gesehen vor dem Elektromotor 3 zu kühlen.

Wie den Fig. 2 und 3 ebenfalls entnehmbar, sind die Hydropumpen 1 und 2 außerhalb der Gehäusehaube 55 zwischen dieser und der Gehäuserückseite 59 angeordnet und mit den Zusatzeinrichtungen, wie Druckbegrenzungsventil 35, Drucksensor 43 und einer Verschmutzungsanzeige 81, versehen. Wenn als Werkstoff für das Aggregatgehäuse 45 ein Kunststoff vorgesehen ist, lässt sich nach Kundenwunsch eine entsprechende Farbgestaltung des Gehäuses auf einfache Weise durch Färben des Kunststoffmaterials realisieren. Auch könnte bei einer transparenten Ausbildung des Tanks 7 auf eine Füllstandsanzeige verzichtet werden. Dank des Kompaktaufbaus auf dem als Gehäusebasis dienenden Tank 7 lässt sich das Aggregat einfach und bequem für einen Einsatz an wechselnden Orten umsetzen. Die Zwangsbelüftung des Elektromotors 3 erlaubt den Einsatz kostengünstiger Motorbauarten und ermöglicht daher eine entsprechend wirtschaftliche Herstellung. Aufgrund des modularen Aufbaus von Gehäuse 45, Trägerplatte 47 sowie Tank 7 lassen sich im Sinne eines Baukastensystems zur Anpassung des Kompaktaggregates an die Anforderungen vor Ort die einzelnen genannten Komponenten in weitgezogenem Rahmen zusammenstellen, wobei sich diese Flexibilität des Auf- und Zusammenbaus auch auf die zum Einsatz kommenden hydraulischen Komponenten des Kompaktaggregates selbst erstreckt.

## Patentansprüche

1. Kompaktaggregat, zumindest bestehend
- aus einem in Gehäuseteilen (7, 55) eines Aggregatgehäuses (45) aufgenommenen Elektromotor (3), der mindestens eine Hydropumpe (1) antreibt und dabei Wärme abgibt;
- aus einer Luft-Wärmetauschereinrichtung (14); und
- aus einem Lüfter (19), der zur Erzeugung eines Luftstroms (65) antreibbar ist,
wobei im Aggregatgehäuse (45) eine Strömungsleiteinrichtung (47, 55) vorhanden ist,
**dadurch gekennzeichnet, dass** die Strömungsleiteinrichtung (47, 55) aus dem Luftstrom (65) zumindest einen den Elektromotor (3) umströmenden ersten Teilstrom (67) und einen der Wärmetauschereinrichtung (14) zuströmenden zweiten Teilstrom (69) abteilt; und dass der Elektromotor (3) eine erste Hydropumpe (1) und eine zweite Hydropumpe (2) antreibt, die mit ihrer Saugseite mit einem Hydraulikfluid bevorratenden Tank (7) verbunden sind und von denen die erste Hydropumpe (1) eine Fluidströmung durch die Wärmetauschereinrichtung (14) hindurch zum Tank (7) erzeugt und die zweite Hydropumpe (2) zur Druckversorgung mindestens einer Arbeitshydraulik dient.

2. Kompaktaggregat nach Anspruch 1, **dadurch gekennzeichnet, dass** der Elektromotor (3) im Luftstrom zwischen Lüfter (19) und Wärmetauschereinrichtung (14) angeordnet ist.

3. Kompaktaggregat nach Anspruch 1 oder 2, **dadurch gekennzeichnet, dass** die Strömungsleiteinrichtung (47, 55) aus dem Luftstrom einen dritten Teilstrom (71) bildet, der als Kühlluftstrom für einen zur Steuerung des Elektromotors (3) vorgesehenen Frequenzumrichter (5) dient.

4. Kompaktaggregat nach einem der vorstehenden Ansprüche, **dadurch gekennzeichnet, dass** die Strömungsleiteinrichtung (47, 55) für den Luftstrom einen ersten Strömungsweg vorgibt, der zwischen Frontseite (57) und dazu entgegengesetzter Rückseite (59) des Gehäuses (45) verläuft und in dem der Lüfter (19), der Elektromotor (3) und ein Kühlkörper (73) des Frequenzumrichters (5) gelegen sind, sowie einen davon abzweigenden weiteren Strömungsweg vorgibt, der zu einer Seite (60) des Aggregatgehäuses (45) hin, vorzugsweise im rechten Winkel, abzweigt und in dem die Wärmetauschereinrichtung (14) angeordnet ist.

5. Kompaktaggregat nach einem der vorstehenden Ansprüche, **dadurch gekennzeichnet, dass** zwischen Tank (7) und den Saugseiten der Hydropumpen (1, 2) jeweils eine Filtereinrichtung (9, 11) vorgesehen ist.

6. Kompaktaggregat nach einem der vorstehenden Ansprüche, **dadurch gekennzeichnet, dass** der Tank (7) im Aggregatgehäuse (45) ein Basisteil bildet, auf dem, in einer Axialrichtung von Frontseite (57) zu Rückseite (59) hin, der Lüfter (19), der Elektromotor (3) und erste und zweite Hydropumpe (1, 2) auf einer Deckplatte (47) des Tanks (7) angeordnet sind, und dass die Wärmetauschereinrichtung (14) seitlich des Elektromotors (3) und der Frequenzumrichter (5) seitlich der Hydropumpen (1, 2) angeordnet sind.

7. Kompaktaggregat nach einem der vorstehenden Ansprüche, **dadurch gekennzeichnet, dass** als Bestandteile der Strömungsleiteinrichtung die Deckplatte (47) des Tanks (7) sowie eine den Lüfter (19) und den Elektromotor (3) umgebende Gehäusehaube (55) vorgesehen sind.

8. Kompaktaggregat nach einem der vorstehenden Ansprüche, **dadurch gekennzeichnet, dass** das Aggregatgehäuse (45) zumindest teilweise aus Kunststoff oder zumindest teilweise aus Alu-Druckguss gebildet ist.

## Claims

1. Compact power unit, at least consisting of
- at least one electric motor (3) received in housing parts (7, 55) of a power unit housing (45), said motor driving at least one hydraulic pump (1) and giving off heat in the process;
- an air-heat exchanger apparatus (14); and
- a fan (19), which can be driven to generate an air flow (65),
a flow guide apparatus (47, 55) being provided in the power unit housing (45), **characterised in that** the flow guide apparatus (47, 55) subdivides at least one first partial flow (67) flowing around the electric motor (3) and a second partial flow (69) flowing to the heat exchanger apparatus (14); and **in that** the electric motor (3) drives a first hydraulic pump (1) and a second hydraulic pump (2), which are connected via their suction side to a tank (7) storing hydraulic fluid, the first hydraulic pump (1) of said pumps generating a fluid flow through the heat exchanger apparatus (14) to the tank (7) and the second hydraulic pump (2) serving to supply pressure to at least one operating hydraulic system.

2. Compact power unit according to claim 1, **characterised in that** the electric motor (3) is arranged in the air flow between the fan (19) and the heat exchanger apparatus (14).

3. Compact power unit according to either claim 1 or claim 2, **characterised in that** the flow guide apparatus (47, 55) forms a third partial flow (71) from the air flow, said third partial flow acting as a cooling air flow for a frequency converter (5) provided to control the electric motor (3).

4. Compact power unit according to any one of the preceding claims, **characterised in that** the flow guide apparatus (47, 55) defines a first flow path for the air flow, said path running between the front side (57) and the opposite rear side (59) of the housing (45), and in which the fan (19), the electric motor (3) and a cooling body (73) of the frequency converter (5) are located, and also defines a further flow path branching off said path and branching to one side (60) of the power unit housing (45), preferably at a right angle, and in which the heat exchanger apparatus (14) is arranged.

5. Compact power unit according to any one of the preceding claims, **characterised in that** a filter apparatus (9, 11) is in each case provided between the tank (7) and the suction sides of the hydraulic pumps (1, 2).

6. Compact power unit according to any one of the preceding claims, **characterised in that** the tank (7) forms a base part in the power unit housing (45), on which, in an axial direction from the front side (57) to the rear side (59), the fan (19), the electric motor (3), and the first and second hydraulic pump (1, 2) are arranged on a cover plate (47) of the tank (7), and the heat exchanger apparatus (14) is arranged at the side of the electric motor (3) and the frequency converter (5) is arranged at the side of the hydraulic pumps (1, 2).

7. Compact power unit according to any one of the preceding claims, **characterised in that** the cover plate (47) of the tank (7) and a housing hood (55) surrounding the fan (19) and the electric motor (3) are provided as components of the flow guide apparatus.

8. Compact power unit according to any one of the preceding claims, **characterised in that** the power unit housing (45) is at least partially formed from plastics material or at least partially from diecast aluminium.

## Revendications

1. Groupe compact consistant au moins
- en un moteur (3) électrique, qui est reçu dans des parties (7, 55) d'une enveloppe (45) du groupe, qui entraîne au moins une pompe (1) hydraulique et qui ainsi cède de la chaleur ;
- en un dispositif (14) d'échangeur de chaleur à air ; et
- en un ventilateur (19), qui peut être entraîné pour la production d'un courant (65) d'air,
dans lequel il y a dans l'enveloppe (45) du groupe un dispositif (47, 55) de conduite d'un écoulement,
**caractérisé en ce que** le dispositif (47, 55) de conduite d'un écoulement sépare du courant (65) d'air au moins un premier courant (67) partiel passant autour du moteur (3) électrique et un deuxième courant (69) partiel allant au dispositif (14) d'échangeur de chaleur et **en ce que** le moteur (3) électrique entraîne une première pompe (1) hydraulique et une deuxième pompe (2) hydraulique, qui communiquent par leur côté d'aspiration avec un réservoir (7) de mise en réserve d'un fluide hydraulique et dont la première pompe (1) hydraulique produit un écoulement de fluide allant au réservoir (7) en passant par le dispositif (14) d'échangeur de chaleur et la deuxième pompe (2) hydraulique sert à l'alimentation en pression d'au moins une hydraulique de travail.

2. Groupe compact suivant la revendication 1, **caractérisé en ce que** le moteur (3) électrique est disposé dans le courant d'air entre le ventilateur (19) et le dispositif (14) d'échangeur de chaleur.

3. Groupe compact suivant la revendication 1 ou 2, **caractérisé en ce que** le dispositif (47, 55) de conduite d'un écoulement forme à partir du courant d'air un troisième courant (71) partiel, qui sert de courant d'air de refroidissement d'un convertisseur (5) de fréquence prévu pour la commande du moteur (3) électrique.

4. Groupe compact suivant l'une des revendications précédentes, **caractérisé en ce que** le dispositif (47, 55) de conduite d'un écoulement prescrit pour le courant d'air un premier trajet d'écoulement, qui s'étend entre le côté (57) avant et le côté (59) arrière, qui lui est opposé, de l'enveloppe (45) et dans lequel sont mis le ventilateur (19), le moteur (3) électrique et un corps (73) de refroidissement du convertisseur (5) de fréquence, ainsi que prescrit un autre trajet d'écoulement, qui en bifurque et qui bifurque vers un côté (60) de l'enveloppe (45) du groupe, de préférence à angle droit, et est disposé dans le dispositif (14) d'échangeur de chaleur.

5. Groupe compact suivant l'une des revendications précédentes, **caractérisé en ce que** respectivement un dispositif (9, 11) de filtration est prévu entre le réservoir (7) et le côté de l'aspiration des pompes (1, 2) hydrauliques.

6. Groupe compact suivant l'une des revendications précédentes, **caractérisé en ce que** le réservoir (7) forme dans l'enveloppe (45) du groupe une partie de base, sur laquelle, dans une direction axiale allant du côté (57) avant au côté (59) arrière, sont montés sur une plaque (47) de recouvrement du réservoir (7), le ventilateur (19), le moteur (3) électrique et la première et la deuxième pompes (1, 2) hydrauliques et **en ce que** le dispositif (14) d'échangeur de chaleur est disposé latéralement au moteur (3) électrique et le convertisseur (5) de fréquence est disposé latéralement aux pompes (1, 2) hydrauliques.

7. Groupe compact suivant l'une des revendications précédentes, **caractérisé en ce qu'**il est prévu comme partie constitutive du dispositif de conduite d'écoulement, la plaque (47) de recouvrement du réservoir (7), ainsi qu'une hotte (55) d'enveloppement entourant le ventilateur (19) et le moteur (3) électrique.

8. Groupe compact suivant l'une des revendications précédentes, **caractérisé en ce que** l'enveloppe (45) du groupe est au moins en partie en matière plastique ou au moins en partie en aluminium moulé sous pression.
